(19) Europäisches Patentamt
European Patent Office
Office européen des brevets

(11) Publication number: 0 194 483
B1

(12) # EUROPEAN PATENT SPECIFICATION

(45) Date of publication of the patent specification: 31.05.89

(51) Int. Cl.⁴: B 01 D 53/22, B 01 D 13/00

(21) Application number: 86102208.5

(22) Date of filling: 20.02.86

(54) **Method for gas separation.**

(30) Priority: 01.03.85 US 707299
01.03.85 US 707298

(43) Date of publication of application: 17.09.86 Bulletin 86/38

(45) Publication of the grant of the patent: 31.05.89 Bulletin 89/22

(84) Designated Contracting States: BE DE FR GB NL

(56) References cited:
EP-A-0 047 640
US-A-3 527 618
US-A-3 847 672

(73) Proprietor: AIR PRODUCTS AND CHEMICALS, INC., P.O. Box 538, Allentown, Pennsylvania 18105 (US)

(72) Inventor: Pez, Guido Peter, 3705 Vale View Drive, Allentown, PA 18103 (US)
Inventor: Carlin, Richard Trotter, Idylwood Apts, Apt No. 6 66 Slate Creek Drive, Cheektowaga New York 14227 (US)

(74) Representative: Kador & Partner, Corneliusstrasse 15, D-8000 München 5 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

EP 0 194 483 B1

LIBER, STOCKHOLM 1989

## Description

This invention relates to an improved method of separation of a gas from a mixture of gases and to improved membranes for the separation process.

Numerous approaches to the separation of a gas from a mixture of gases by differential permeation have been investigated. Robb et al., in U.S. Patent 3 335 545, have proposed use of a liquid, entrapped in a porous or permeable support, to separate mixtures of gases. The use of a so-called "quasi-liquid film," for example, diethylene glycol, in a support has permitted separation of carbon dioxide from nitrogen, hydrogen or oxygen, the selectivity being somewhat higher than would be predicted on the basis of the molecular weights of the gases as the sole factor, influencing separation. Ward, III, has proposed, in U.S. Patent 3 503 186, a similar procedure for separating sulfur dioxide from other gases.

The use of facilitated transport liquid membranes has been reviewed by Way et al., J. Membrane Science, vol. 12 (1982), pages 239 - 259. Another typical disclosure of gas separation using a facilitated transport immobilized membrane is that of Bassett et al., Biochimica et Biophysica Acta, vol. 211 (1970), pages 194 - 215. Facilitated transport of gases through liquid membranes is also recited, for example, in the following U.S. Patents:

3 396 510 Ward, III, et al.
3 676 220 Ward, III
3 819 806 Ward, III et al.
4 014 665 Steigelmann
4 015 955 Steigelmann et al.
4 119 408 Matson
4 147 754 Ward, III
4 174 374 Matson

Ward, III, et al. '510 recite using an immobilized liquid film as a permeable membrane, wherein the liquid film contains at least one soluble, non-volatile, dissolved carrier species, which is reversibly chemically reactive with a selected component of a gaseous mixture.

Kimura, et al. (U.S. Patent 4 318 714) have recited using an ion-exchange membrane to accomplish facilitated separation of a gas from a mixture of gases.

Yanamoto, et al. (U.S. Patent 3 155 467) have disclosed separation and purification of hydrogen, using a palladium alloy as a permeable wall structure.

Solid and molten salt electrolytes have been disclosed, in the fuel cell or electrochemical arts, in the following representative patents:

3 400 054 Ruka et al.
3 432 363 Gillis
3 527 618 Bushnell
3 727 058 Schrey
4 317 865 Trocciola et al.
U.K.2 082 156 Yoshisato et al.

Yoshisato, et al., in U.S. Patent 4 330 633, recite using a solid electrolyte comprising a sintered body of mixed inorganic metal oxides as a membrane for the regeneration of oxygen at relatively high temperatures (about 800°C).

Oxygen is known to permeate selectively through metallic silver. However, oxygen fluxes at reasonable temperatures (about 400°C) are low, as reported by Gryaznov, et al., Russian. J. Phys. Chem., vol. 47 (1973), pages 1517 - 1519. At higher temperatures, metallic membranes for the separation of oxygen from other gases are unstable, see Mulhaupt, U.S. Patent 3 359 705.

In the US-PS 3 847 672 a fuel cell system comprising an anode, a cathode and an electrolyte in combination with a gas separator is described. $CO_2$ is separated from the gas mixture by being chemically taken up by a metal oxide mixture. So to guarantee a complete separatio of the gas mixture the system uses an electrolyte system.

A limiting feature in many of these disclosures is that a gas should not completely permeate the electrolyte or electrode, since complete penetration could short circuit the device.

Batlgne et al., U.S. Patent 4 396 572, recite using a porous ceramic barrier, having a plurality of superimposed layers of pastes of varying composition, to separate uranium hexafluoride isotopes by ultrafiltration.

It is apparent that presently available membranes for separation of gases by diffusion, permeation or ultrafiltration are for the most part relatively unselective or complex in structure.

It is therefore an object of this invention to provide methods and articles of the separation of gases from mixtures, which are much more highly selective and have higher fluxes of permeating gas than presently available methods and to provide membranes which are simple to construct and to use.

In one aspect, this invention relates to a process for separating at least one gas from a mixture of gases, comprising passing the gas mixture over a membrane selectively permeable to the gas being separated, which

membrane comprises a thin, porous inert support in which an active material is immobilized within the pores and the active material is a molten salt being capable of undergoing one or more reversible reactions with the gas being separated, characterized in that the reversible reaction is a formation of a coordination complex, a formation of an organic chemical compound or an oxidation-reduction reaction.

In another aspect this invention relates to a process for separating a gas from at least one other gas in a mixture, characterized in that the reversible oxidation-reduction reaction is a nitrate-nitrite interconversion, oxygen is the gas being separated and the molten salt in the membrane is a mixture of alkali metal nitrate and alkali metal nitrite.

Still another aspect of the invention relates to a process for separating a gas from at least one other gas in a mixture characterized in that the gas passing through the membrane is removed by the stream of sweep gas.

In the process of this invention a gas is separated from at least one other gas in a mixture by the steps of introducing the mixture into a module having at least a feed gas inlet and a permeate gas outlet and containing a membrane selectively permeable to the gas being separated which membrane comprises a thin, porous inert support in which an active material is immobilized within the pores, which membrane has a inlet side and a permeate side and which active material is a molten salt capable of undergoing one or more reversible reactions, with the gas being separated; passing the mixture through the feed inlet and into contact with the inlet side of the membrane; removing from the inlet side of the membrane a gas stream rejected by the membrane and removing from the permeate gas outlet the gas passing by reaction through the membrane.

The membrane for the inventive gas separation processes, comprises a thin, porous, inert support in which a molten active salt is immobilized, which is capable of undergoing one or more reversible reactions, with the gas being separated, which also can be different from oxidation-reduction reactions.

"Salt," as used in the specification and claims, means a substance which is comprised of cations and anions and which is characterized by overall electrical neutrality. The cations and anions may be inorganic, organic or a combination of both. It will be understood that salts have a wide range of melting points and that, for the purposes of this invention, the melting point of the salt used as active material is the minimum temperature, at which the membranes of this invention can be used for separation of a gas from a mixture of gases.

"Immobilized," as used in the specification and claims, refers to molten active material, captured within the pores or interstices of the ceramic or other support, as well as any material in the form of a thin film of salt melt on the surface of the support. Although the molten salt need not necessarily fill the entire void volume of the porous support, it is believed that a thin continuous layer of molten salt in or on the support is necessary for the successful operation of the membranes.

"Reversible reaction," as used in the specification and claims essentially means a chemical reaction which can go forward to the right or backwards to the left, depending upon the relative concentrations of reactants and products at any time. One type of reversible reaction within the meaning of the invention is formation of a coordination complex. A coordination complex or coordination compound consists of a central atom or ion, surrounded by a set of other atoms, ions or small molecules. The atoms, ions or molecules surrounding the central atom are conventionally called ligands. The resulting entity is generally a complex and, specifically, in the practice of this invention is a complex ion. The gas being separated from the mixture will accordingly be a ligand in this complex ion.

Typical examples of coordination compounds include entities such as $PF^-_6$, $Cr(CO_6)$, $Cr(NH_3)^{+3}_6$, $CO(NH_3)^{+3}_6$ $CoCl^=_4$ and $Zn(NH_3)^{++}_2$. The complexes useful in accordance with this invention will be those formed by an ion of a salt, whether a cation or an anion.

In a representative case, the separation of ammonia from nitrogen in contact with a membrane comprising molten zinc chloride, it is proposed that the zinc chloride in this ammonia-rich environment reacts reversibly to form a zinc ammoniate coordination compound, $Zn(NH_3)^{++}$. The initial condition of a cross-section of the membrane is thought to be that depicted below:

FEED SIDE $+NH_3 + N_2$

$$Zn^{++} 2Cl^- + NH_3 \rightleftarrows Zn(NH_3)^{++} 2Cl^-$$

$$Zn^{++} 2\ Cl^-\ Zn^{++} 2\ Cl$$

PERMEATE SIDE $NH_3$

The zinc ammoniate ions thus formed at the feed side will diffuse toward the permeate side, where there is a lower concentration of such ions. At the permeate side membrane-gas interface, where there is a much lower partial pressure of ammonia, the zinc ammoniate ions will reversibly dissociate back into zinc ions and free ammonia, which is removed as the permeate stream.

The steady state condition of the membrane is shown in the diagram below, wherein the zinc ions thus formed at the permeate side diffuse back to a region of lower concentration at the feed side, thus completing the overall cycle, which amounts to net transport of ammonia through the membrane. This net transport of ammonia through the membrane arises from the reversible reactivity of ammonia with zinc ions and the mobility of the zinc ions and zinc ammoniate ions in the molten salt. Chloride acts, in this example, to provide electrical neutrality.

| | | | |
|---|---|---|---|
| FEED SIDE | ↓$NH_3$ feed | | → $N_2$ |
| | $Zn^{++} + 2Cl^- + NH_3$ | ⇄ | $Zn(NH_3)^{++} + 2\ Cl^-$ |
| | ↑ | | ↓ |
| | $Zn^{++} + 2Cl^- + NH_3$ | ⇄ | $Zn(NH_3)^{++} + 2\ Cl^-$ |
| PERMEATE SIDE | ↓$NH_3$ permeate | | |

The other feed gas, nitrogen, does not react with the molten salt. Since there is no mechanism by which nitrogen can be transported actively through the membrane, it remains largely on the feed side and an excellent overall separation of ammonia nitrogen is thus achieved.

Although the foregoing gives a proposed theoretical explanation of the mechanism by which the process of the present invention operates, it will be understood that the inventors do not wish to be bound by such explanation and rely on the appended claims to define the invention.

In practice, preferred separations employing coordination complexes are those wherein:

(a) fused molten lithium nitrate is used for the separation of ammonia from nitrogen or hydrogen or a mixture thereof, preferably from nitrogen, by the reversible formation of a lithium ammoniate in the melt;

(b) ammonia is separated from hydrogen or nitrogen using molten zinc chloride as the active material in the membrane and the complex formed in the melt is a mono or diammoniate; and

(c) water is separated from oxygen, nitrogen or air by formation of one or more dissolved hydrate complexes in a melt of lithium and sodium nitrates.

A further reversible reaction, utilized in the practice of this invention, is formation of an organic chemical compound, which is capable of spontaneous formation and dissociation at the temperature of operation of the membrane. For example, tetraalkylammonium salts of amino acids can react reversibly with carbon dioxide to form carbamates. This reaction can be used for the separation of carbon dioxide from other gases. Alkyl can be the same or different alkyl of 1 - 24 carbon atoms. A preferred embodiment is that in which the amino acid is glycine or sarcosine and the alkyl is of 1 - 10 carbon atoms. In the case of sarcosine, the relevant reaction is:

$$CO_2 + HN(CH_3)CH_2COO^- \rightleftarrows HOOCN(CH_3)CH_2COO^-$$

It is proposed that separation of ammonia, based on formation of coordination complexes with zinc chloride may be governed according to chemical properties set forth by Krasnov et al., "Tables and Diagrams of Thermodynamic Properties of Zinc Chloride Ammoniates in Vapor and Liquid Phases," Moskov. Vsesoyuznyy Toplo-Tekhnicheskiy Institut. Izvestiya, Moscow no. 11 (1935) pages 44 - 49; Starokadomskaya, "Saturation Pressure of Ammonia During the Thermal Decomposition of the Diammonium Salt of Zinc Chloride," Zhurnal Prikladnoy Khimii, vol. 9 (1935 or 1936), pages 599 - 602; Zubakhina, "Investigation of Complexing in the $ZnCl_2$-$NH_3$ System," Trudy Nauchno-Issledovateklskogo Instituta Osnovnoy Khimii, vol 19 (1969), pages 105 - 110.

Solubility behavior of ammonia in melts of alkali nitrate and perchlorate is discussed by Allulli, J. Phys. Chem., vol 73 (1969), pages 1084 - 1087.

Properties of chloroaluminates, which might be germane to the use of molten cuprous chloride coordination complexes, e. g., $(C_2H_5)_3NH^+$ $CuCl^-_2$ or $(C_2H_5)_3$ $NH^+CuCl_2$ - as active materials for the coordination of carbon monoxide, are reported by Walker, "Solid and Liquid Phases Containing $CuAlCl_4$," Symposium on Advances in Separation Technology, presented before the Division of Petroleum Chemistry, Inc., Seattle Meeting, March, 1983 pages 746 - 755; Kendall, et al., "A Study of the Factors Influencing Compound Formation and Solubility in Fused Salt Mixtures," J. Am. Chem. Soc., vol. 45 (1923) pages 963, ff; Hussey, "Room Temperature Molten Salt Systems, Mamantov et al., ed., Advances in Molten Salt Chemistry 5, Elsevier, New York (1983) pages 185 - 219; Hussey et al., "The Electrochemistry of Copper in a Room Temperature Acidic Chloro-aluminate Melt," J. Electrochem. Soc.: Solid-State Science and Technology vol. 126, 1979, pages 1029 - 1034; and Hussey, Mamantov ed., Advances in Molten Salt Chemistry 5, pages 219 - 223.

The reaction of silver (1) compounds having hard counterions; e. g., $AgBF_4$, $AgClO_4$, with olefins is recited by Cotton et al., "Advanced Inorganic Chemistry A Comprehensive Text," John Wiley & Sons, New York (1980), pages 971 - 972. It is expected that the reported complex formation of monovalent silver compounds with olefins could be exploited for separating olefins from a gas mixture containing them.

Another reversible reaction is a "Reversible oxidation-reduction reaction," which as used in the specification and claims essentially means an oxidation-reduction reaction which can go forward to the right or in reverse to the left, depending upon the relative concentrations of reactants and products at any time. Representative reactions include interconversion between nitrate and nitrite ions:

$$2\ NO^-_3 \rightleftarrows 2\ NO^-_2 + O_2$$

It is proposed that oxides are produced by reactions such as:

$$4\ NO^-_3 \rightarrow 2\ O^= + 4\ NO_2 + O_2$$

and that the oxides in the melt, including one or more of $O^=$, $O^=_2$ and $O_2^-$, catalyze the reaction.

Another type of oxidation-reduction reaction which can be exploited in the practice of this invention includes

interconversion of oxygen-oxide species:

$$O_2 \underset{-e^-}{\overset{+e^-}{\rightleftarrows}} O_2 \underset{-e^-}{\overset{+e^-}{\rightleftarrows}} O_2{=}$$

A further exemplary oxidation-reduction reaction is that involving oxidation of hydrogen by hydroxide ions:
$H_2 + OH^- \rightleftarrows H_2O + H^-$

In a representative case, an alkali metal nitrate molten salt membrane is first activated by allowing some of the nitrate ($NO^-_3$) ions to lose oxygen and to form nitrite ($NO^-_2$) ions in the melt spontaneously, as result of heating.
$M^+NO^-_3 \rightleftarrows M^+NO^-_2 + 1/2\,O_2$

The working molten salt membrane will thus contain both an alkali metal nitrate and an alkali metal nitrite. The operation of the membrane can be further visualized as follows:
At the feed side of the membrane, nitrogen and oxygen are in contact with the surface of the alkali metal nitrate/nitrite melt. The initial condition is as depicted in the following croßsectional diagram of the membrane:

FEED SIDE ↓feed: $O_2 + N_2$

$M^+ NO^-_2 + 1/2\,O_2 \rightleftarrows M^+ NO^-_3$

$M^+ NO^-_2 + 1/2\,O_2 \rightleftarrows M^+ NO^-_3$

PERMEATE SIDE

The excess concentration of nitrate ions at the feed side of the membrane will promote their diffusion towards the permeate side. At this interface, there is a much lower partial pressure of oxygen, than at the feed interface; therefore, nitrate ions will reversibly dissociate into nitrite ions and liberate oxygen, which is removed in the permeate stream. The steady state condition of the membrane is shown in the diagram below, in which nitrite ions thus formed at the permeate side diffuse back to a region of lower concentration at the feed side to complete the overall cycle, which amounts to net transport of oxygen through the membrane. The net transport of oxygen arises from reversible reactivity of oxygen with nitrite ions and mobility of the nitrite and nitrate ions in the salt.

FEED SIDE ↓$O_2$ $N_2$ →

$M^+ NO_2 + 1/2\,O_2 \rightleftarrows M^+ NO_3$

$M^+ NO^-_2 + 1/2\,O_2 \rightleftarrows M^+ NO^-_3$

PERMEATE SIDE ↓$O_2$ permeate

The other feed gas, nitrogen, does not react with the molten salt. Because there is no mechanism by which nitrogen can be actively transported through the melt, it will be largely rejected at the feed side of the membrane. In this way, excellent separation of nitrogen and oxygen is achieved.
Although the foregoing gives an attempt to provide a theoretical explanation of the mechanism of the process of the present invention, it will be understood that the inventors do not wish to be bound by such explanation and rely on the appended claims to define the invention.
It is proposed that the use of an alkali metal nitrate melt membrane for separation of oxygen from air relies on the nitrate-nitrite interconversion. However, the reaction between oxygen and oxide species may also be occurring, as discussed more fully by Zambonin, et al., J. Am. Chem. Soc., vol. 91 (1969), pages 2225 - 2228; Zambonin, Electroanalytical Chemistry and Interfacial Electrochemistry, vol. 45 (1973), pages 451 - 458 and Flinn et al., J. Electroanal. Chem., vol 63 (1975), pages 39 - 57.
It is also known that other molten salt systems react reversibly with oxygen by processes involving equilibria with reduced oxygen species, particularly oxide ($O^=$), peroxide ($O^-_2$) and superoxide ($O^-_2$). For example, it has been reported that $Na_2O$-$Na_2SO_4$ melts take up oxygen reversibly at 920° C, presumably by the reactions:

$$Na_2O + 1/2\,O_2 \rightleftarrows Na_2O_2 \text{ or } O^= + 1/2\,O_2 \rightleftarrows O^=_2$$

Stern et al., J. Phys. Chem. vol. 83 (1979), pages 2848 - 2854. It is also thought that redox equilibria, involving the decomposition of sulfate to sulfite and gaseous sulfur dioxide, are involved.
It is expected that hydrogen-hydride interconversion in molten alkali metal hydroxide membranes of the invention would operate in accordance with the behavior reported by Baikov, et al., "Activation of Molecular Hydrogen by Solid and Fused Hydroxides. III. Kinetics and Mechanism of Isotope Exchange Between Hydrogen and Solutions of Water in Alkali Kelts" and "IV. The Role of Cations in the Catalysis of Homomolecular

Exchange of Hydrogen on Solid Hydroxides," Kinetika i Kataliz, vol. 23 (1982), pages 573 - 577 and vol. 24 (1983), pages 502 - 505.

Reversible oxygen uptake from $Na_2O$-NaCl melts is also known, Stern, et al., J. Electrochem. Soc., vol. 124 (1977), pages 641 - 649.

Cuprous chloride-alkali metal halide melts, e. g., CuCl-$ClCl_2$-KCl, are also known to react reversible with oxygen probably by the reaction:

$$Cu_2OCl_2(1) \rightleftarrows Cu_2Cl_2(1) + 1/2\ O_2$$

Fontana, et al., Ind. Eng. Chem., vol. 44 (1952), pages 369 - 378.

Because of the complexity of the redox processes thought to occur in salt melts, it is understood that the processes of this invention include transfer of gases, capable of undergoing an oxidation-reduction reaction with a molten salt, immobilized in a support, regardless of the mechanism by which the process actually takes place.

It will be understood that the reversible reactions, appropriate for use in the practice of this invention, are not limited to those set forth above.

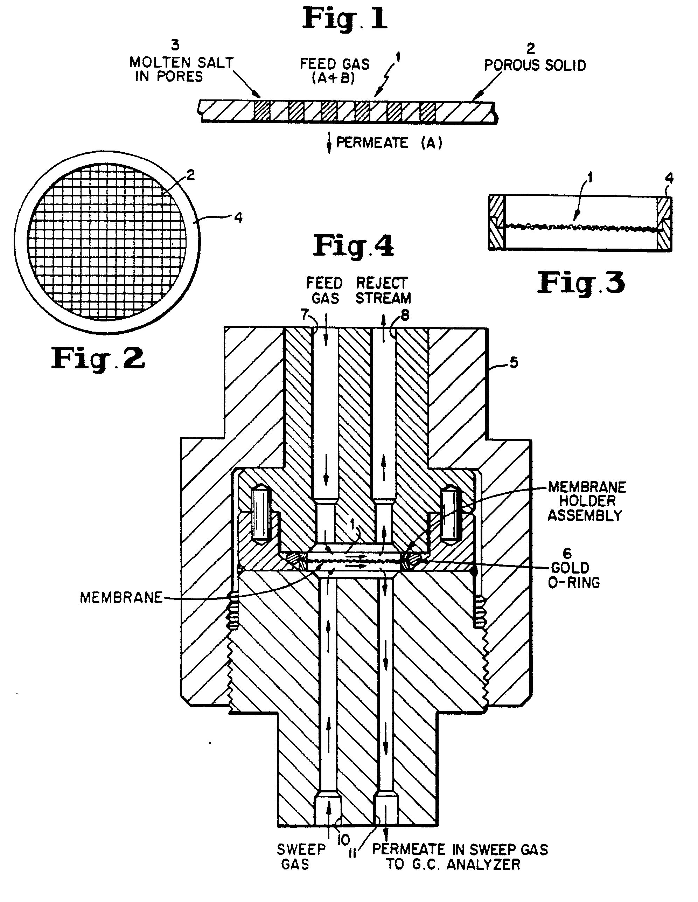

The membranes of the present invention are represented macroscopically in Fig. 1, for the separation of a permeable gas (A) from a mixture of gases A and B. The porous solid support is a rigid, or slightly flexible, inert material, selected from metallic, polymeric or ceramic substrates. The support material is filled or coated with at least a continuous layer of the selected molten salt, or mixture thereof. The feed gas passes over the feed side of the membrane, as shown by the mixture A + B on the upper side of Fig. 1. The reactive member of the gas mixture will undergo one or more reversible reactions with ions in the molten salt, as discussed above. Eventually, at steady state conditions, the reactive gas (A) permeates the membrane. In an experimental context, the reactive or permeate gas (A) is removed from the system by an inert sweep gas and a sample of the sweep gas stream is transferred to a gas chromatograph for analysis. In a large scale utilization of the invention, it will be preferred to exhaust permeate gas from the system with a compressor and transfer relatively pure permeate gas to a process requiring it or to containers.

It is proposed that the gas pressure, required to displace liquid that is immobilized by capillary forces from the pores of a porous wetted membrane, conforms to the equation (Porter, "Handbook of Separation Techniques for Chemical Engineers," Schweitzer, ed., McGraw-Hill (1979), Appendix A, page 2 - 89):

$$P\ (4\ Y \cos \theta)/d$$

wherein Y is the surface tension of the gas-liquid interface, O is the contact angle between the liquid and the pore wall and d is the pore size.

In qualitative terms, the salt or mixture of salts selected for the membrane will be fluid at the temperature of use, but the melt will not have an excessive rate of flow or tendency to dry out or migrate from the inert support. The salt will be essentially non-volatile under conditions of use.

Although membranes, comprising a monomolecular layer of active molten salt in the inert support will function in accordance with the invention, it is preferred to use membranes, having a continuous film of molten active salt immobilized in and layered on the support, or a combination thereof. Membranes meeting this criterion will have a relatively low permeability to a non-reactive gas at 1.0 bar at the temperature of use, as measured against the background cntent of inert, non-reactive sweep gas on the permeate side of the membrane. In a preferred case, the permeability of nitrogen as the inert gas is selected as a standard and is below 20 Barrer under these conditions.

The support is selected from ceramic, glass, metallic and organic polymeric materials, stable at the temperature of use, which are either rigid or slightly flexible and which do not react with the active molten salt or with the gas mixture being treated. A practical lower limit for the thickness of self-supporting membranes is below 0.01 centimeters, but some thinner materials may lack the rigidity required. However, ultrafine porous ceramic films, less than 20 micrometers in thicness are known, Leemaars et al., J. Materials Science, vol. 19 (1984), pages 1077 - 1088. It will be understood that the support can be coated or adhered to another material, usually of greater porosity, which will provide the structural rigidity required.

For example, a "composite" or "asymmetric" membrane, as described in Schweitzer, "Handbook of Separation Techniques for Chemical Engineers." McGraw Hill (1979), pages 2 - 19 to 2 - 26, contemplated for use in the practice of this invention would have a thin finely porous layer. containing the active molten salt, supported further on a macroporous support comprising polymeric, ceramic or metallic material.

It is further preferred that the support have a pore siz of 0.003 - 100 micrometers. It will be appreciated that large effective membrane areas can be attained by using a plurality of smaller connected by a manifold or other connecting means, or that a large membrane can be made mechanically strong by the use of supporting means, well known to those skilled in the art.

The membrane may be contained within a module in the configuration of hollow fibers, a spiral winding or a series of flat plates. A description of hollow fiber and spirally-wound membrane configurations is given in Schweitzer, ibid. pages 2 - 61 to 2 - 65 and 2 - 21, respectively.

In any separation process, carried out under the principales of this invent ion where the molten salt undergoes reversible reactions with the gas being separated, the maximum achievable flux of permeate gas per cross-sectional area of membrane is equal to the effective diffusion coefficient of the carrier (active molten

salt), multiplied by the concentration gradient of carrier (driving force) between the two interfaces of the membrane. Thus,

Flux = D x (ΔC/AFIG)
$(cm^3 \cdot cm^{-2} \cdot sec^{-1}) = (cm^2 \cdot sec^{-1}) \times (cm^3 \cdot cm^{-3}/cm)$

In general, the flux through a membrane may be expressed as the product of a standard permeability times the cross-sectional area of the membrane, times (Δ/ΔFIG), wherein ΔFIG is the pressure difference across the membrane and AFIG is the thickness of the membrane.

As in any facilitated transport sysem, the actual flux will also depend on the kinetics of the reversible reactions of the permeating gas with the molten salt.

Permeability (Po) is expressed in Barrer units, that is,

$1 \text{ Barrer} = (cm^3 \cdot cm \times 10^{-10})/(sec. \, cm^2 \cdot cmHg)$

When polymeric membranes are used to support a melt and it is desired to express the gas flux through the membrane in a manner which reflects only the separation performance of the melt, a correction will be made for the porosity and tortuosity of the membrane, so that:

Flux = Po · A. (ΔP/ΔFIG) (porosity/tortuosity)

Selectivity (S) for a mixture of gases, A and B, in which A is the permeate gas, is expressed by the ratio of permeabilities:

$S = Po_A/Po_B$

Very high selectivities are observed, using typical membranes of this invention. For example, selectivities of 80 - 145 were measured for separation of ammonia from nitrogen, using a molten salt membrane of lithium chloride. The same separation, utilizing molten zinc chloride as the active molten salt in the membrane, gave selectivites above 1000 : 1.

The selectivity for separation of water vapor from nitrogen, using a molten lithium nitrate/sodium nitrate membrane, was about 200 : 1.

It is therefore apparent that the membranes of the present invention give impressive selectivities, compared to selectivities of known membranes, typical examples of which are set forth in Table 1 below.

For the regeneration of oxygen from air, preferred melts are lithium nitrate or sodium nitrate, immobilized in a porous metallic or ceramic support. Preferred operating temperatures are above 400°C, more preferably above 450°C. Mixtures of nitrates, particularly of two or more of sodium, lithium and potassium nitrates, containing a maximum of 99 % by weight of any of the nitrates, are particularly preferred.

Selectivities approaching 200 for oxygen in air have been achieved, using the teachings of this invention. It will be appreciated that such selectivities are much higher than those observed for separation of oxygen-nitrogen mixtures using conventional polymer membranes, as shown in Table 2.

In Fig. 1 is shown a side view of a membrane, useful for the practice of the invention.

In Figs. 2, 3 and 4 are shown a test apparatus for demonstrating the principles of this invention, including a membrane, membrane holder and test cell.

**Table 1**

Standard Permeabilities (Po) in Barrer Units, and Permeability Ratios (Selectivity) of Polymer Membranes to $NH_3$, $H_2$ and $N_2$

| Membrane | $Po(NH_3)$ | $Po(H_2)$ | $Po(N_2)$ | $Po(NH_3)/Po(H_2)$ | T(°C) |
|---|---|---|---|---|---|
| Ultrathin polyetherimide[a] | 48.4 | 25.8 | 0.361 | 1.9 | 23° |
| Ethyl cellulose[b] | 705 | 87 | 8.4 (at 30°C) | 8.1 | 25° |
| Cellulose nitrate[b] | 57.1 | 2.0 (at 20°C) | 0.12 | 29 | 25° |
| Silicone rubber on polysulfone multi-component membrane[c] | 210[f] | 55[f] | - | 3.8 | RT |
| Polysulfone[c] | 53.0 | 13.0 | | 4.1 | RT |
| Polyethylene[d] | 29 | 7 | 0.9 | 32 | 25° |
| Plasticized poly-(trifluorochloroethylene)[d] | 5 | 4 | 0.3 | 1.3 | 25° |
| Cellulose acetate[e] | 6550[f] | 246[f] | 3.2[f] | 26 | - |
| Poly-4,4'-diphenylene-sulfoneterephthalamide[g] | 1200 | | | 180 | |

(a) Browall , U.S. Patent 4 156 597.
(b) Polymer Handbook, 2nd edition, J. Brandrup et al., Eds., John Wiley and Sons, NY, (1975), page III - 239.
(c) Henis et al., U.S. Patent 4 230 463.
(d) Brubaker et al., Ind. Eng. Chem., vol. 46, (1954), page 733.
(e) Separex[R] sales literature, 1982; relative permeability data given in Table 1 was calculated from Relative permeation rates of Separex[R] cellulose acetate, membranes given as, $NH_3$ (400) $H_2$ (15) $N_2$ (0.20), scf per hour per sq. ft. at 7.03 Kg $km^2$, temperature not specified. Source Battelle, "Business Opportunities in Membrane Technology", Final Report to Multiclient Sponsors, June 22, 1983.
(f) Po/l values x $10^6$ in units of $cm^3/(cm^2 \cdot sec \cdot cm\ Hg)$.
(g) Semenova, U.S.S.R. Patent 1 063 774-A (1983).

**Table 2**

Standard Permeabilities (Po) in Barrer Units, and Permeability Ratios (Selectivity) of Selected Polymer Membranes for Oxygen and Nitrogen

| Membrane | $Po(O_2)$ | $Po(N_2)$ | $Po(O_2)/Po(N_2)$ | T(°C) |
|---|---|---|---|---|
| Poly(dimethyl siloxane) | 605 | 281 | 2.1 | 25 |
| Poly(4-methylene-1) | 32.3 | 7.8 | 4.1 | 25 |
| Butyl Rubber | 1.3 | 0.32 | 4.1 | 25 |
| High Density Polyethylene | 0.40 | 0.14 | 2.9 | 25 |
| Teflon FEP | 4.9 | 1.59 | 3.1 | |

Taken from Polymer Handbook, 2nd edition, J. Brandrup and E. H. Immergut, eds. John Wiley and Sons, New York, 1975, pages III, 229 - 280.

**Best Mode for Carrying out the Invention**

In a most preferred aspect of this invention, the membrane comprises an iaert ceramic support at least 0.02 cm in thickness, and which has a pore size of 0.003 - 200 micrometers, is filled with a continuous film of molten active material and has a permeability to nitrogen below 20 Barrers at 1.0 bar at the temperature of use.

Without further elaboration, it is believed that one skilled in the art can, using the preceding description, utilize the present invention to its fullest extent. The following preferred specific embodiments are, therefore, to be construed as merely illustrative and not limitative of the remainder of the disclosure in any way whatsoever. In the following Examples, temperatures are set forth uncorrected in degrees celsius. Unless otherwise indicated, all parts and percentages are by weight.

For experiments at high temperatures, a membrane comprising a thin film (about 0.2 mm) of a molten salt supported in a porous metallic or ceramic material, was used. In a typical case, the membrane support was a circular piece of # 304 stainless steel woven wire mesh (about 0.02 cm in thickness, pore size from 4 - 13 micrometers, pall corp, cortland, NY), supported rigidly between two Inconel 600 rings about 10 cm in inner diameter. The mesh was loaded with a salt by melting the dry salt into its pores, until at least enough salt was

used to provide a visibly continuous molten film on one surface of the wire mesh. The thus-coated mesh and support assembly was sealed into a sample cell. In Figs. 2 and 3 are shown a top view and a side view, respectively, of holder assembly 4 for a wire mesh membrane support. In Fig. 4 is shown the sample cell 5, including the gold O-ring with which the support assembly is sealed into the sample cell.

The sample cell or module 5, as shown in Fig. 4, was provided with means for introducing feed gas through feed inlet 7 on the feed side of the membrane 1, and for removal of a gas stream rejected by the membrane through reject outlet 8 with permeate sweep gas inlet 10 on the opposite side of the membrane, for passing sweep gas in contact with the membrane 1 and permeate outlet means 11 for conveying permeate gases and carrier gases to an analyzer means. The apparatus was housed in a thermostatted, tubular, high-temperature heating mantle and could operate at temperatures up to about 550° C. The experimental assembly also included a gas manifold and was further provided with electronic mass flow controllers to permit precise blending of feed gas mixtures. A gas chromatograph was used for analysis of the permeate gases in the sweep stream.

In an embodiment of the invention aspect, the method of this invention will be separation of oxygen from other gases using molten sodium or lithium nitrate, immobilized in a porous metal support, at a temperature above 400° C.

**Example 1**

Separation of Ammonia from Nitrogen using a Lithium Nitrate Immobilized Molten Salt Membrane

Stainless steel woven wire mesh (# 304, about 0.02 cm thick, 4 - 13 micrometers pore size, area about 0.8 $cm^2$) was coated with fused lithium nitrate to provide a visibly continuous molten film on one surface of the wire mesh, which was mounted into the high-temperature testing apparatus. The sample was heated to a furnace temperature of 279° C, using a feed flow of 30 $cm^3$/min for feed gas and a sweep flow on the permeate side of the membrane of 30 $cm^3$/min of helium, both at about 1 atmosphere pressure and 25° C. The total pressure in the cell during the experiments was about 1.0 bar. The concentration of gases in the permeate stream was determined by gas chromatography using a 305 cm molecular sieve column for nitrogen and a 183 cm Chromosorb column for ammonia, both operated isothermally at 60° C. After the system had stabilized at the operating temperature, there was no leak of nitrogen across the membrane, as indicated by very low nitrogen permeability.

The utility of the membrane in separating ammonia from nitrogen was tested in three one-day runs. During each run, the concentration of ammonia in the ammonia/nitrogen feed was varied from 0 - 100 %. The concentrations of ammonia and nitrogen in the permeate were monitored by gas chromatography.

Results for specific ammonia nitrogen mixtures, representing an average of the three one-days runs were:

| Gas Mix (bar) | | Permeability (Po) of $NH_3$ | Selectivity (S) for $NH_3$ |
|---|---|---|---|
| $NH_3$ | $N_2$ | Barrer x $10^{-3}$ | $S = PoNH_3/PoN_2$ |
| 0.1 | 0.9 | 9.9 | 245 |
| 0.25 | 0.75 | 7.4 | 129 |
| 0.5 | 0.5 | 7.1 | 80 |
| 1.0 | 0 | 6.5 | - |

These results show that good separation of ammonia and nitrogen was accomplished, using the immobilized lithium nitrate membrane. It is also apparent that permeability is a function of the partial pressures at the feed interface of the membrane.

**Example 2**

(a) Separation of Ammonia from Nitrogen Using a Zinc Chloride Immobilized Molten Salt Membrane

The membrane was prepared by melting zinc chloride into the pores of stainless steel mesh (about 0.02 cm thick, area 0.8 $cm^2$). The membrane was placed in the high temperature cell and checked for continuity by measuring permeability of pure nitrogen at 310° C.

The membrane was used for separation of ammonia from nitrogen over a 21-day period of continuous operation. Gas flow on both the feed and permeate side was 20 $cm^3$/min at about 1 bar and 25° C. Permeabilities were calculated as the means of 10 - 15 measurements of ammonia and nitrogen fluxes over a two-hour period, after the system had reached equilibrium under a given set of conditions. Results were:

| Gas Mix (bar) | | Permeability (Po), $NH_3$ (Barrer x $10^{-4}$) | | |
|---|---|---|---|---|
| $NH_3$ | $N_2$ | 250° C | 300° C | 350° C |
| 0.11 | 0.96 | 10 | 13 | 14 |

| | | | | |
|---|---|---|---|---|
| 0.21 | 0.85 | 6.9 | 7.9 | 15 |
| 0.43 | 0.64 | 2.8 | 4.4 | 4.6 |
| 0.64 | 0.43 | - | 4.3 | - |
| 0.85 | 0.21 | 2.1 | 3.3 | - |
| 1.07 | 0 | 2.1 | 2.9 | 3.2 |

Nitrogen flux through the zinc chloride membrane was very low, close to the background level of nitrogen in the sweep stream. Therefore, the selectivity could not be determined quantitatively, but was estimated to be at least 1000 : 1.

(b) Separation of Ammonia from Hydrogen

Experiments were done as in Example 2(a), using as the feed stream a mixture of ammonia and hydrogen. Argon was used as the permeate sweep gas to facilitate detection of hydrogen by the gas chromatograph.

At 311°C, using feed of pure hydrogen 1,07 bar, the standard hydrogen permeability was calculated to be 9 Barrer. Under the same conditions, using pure ammonia as feed, the permeability of ammonia was 2.9 x $10^4$ Barrers. Therefore, the ammonia/hydrogen selectivity was about 3200 : 1.

**Example 3**

Separation of Ammonia from Nitrogen Using Zinc Chloride Immobilized Molten Salt Supported in a Porous Ceramic Membrane

A circular sample of woven zirconium dioxide cloth (about 0.038 cm in thickness, 87 % porosity, type ZYW-15, Zircar Ceramics, Florida, N.Y.) was soaked in molten zinc chloride. The thus-impregnated membrane was sandwiched between two annular Inconel rings (outer diameter about 1 cm, inner diameter about 0.6 cm). The resulting assembly was sealed into the high temperature test cell using gold O-rings.

Permeability measurements were made as in Example 2 at gas pressures of about 1 bar, feed rates of ammonia/nitrogen or helium sweep gas of 20 $cm^3$/min at about 1 atm and 25°C and an internal membrane temperature of 311°C.

Owing to uncertainties about the thickness of the membrane, permeabilities in Barrer, as indicated below, are uncertain. Membrane performance, defined as Po/ΔFIG ($cm^3/cm^2$ sec · cmHg) was obtained by dividing standard permeability by the assumed thickness of the membrane (l = 0.038 cm). The nitrogen flux was accordingly very low, compared to the background level of nitrogen in the helium sweep. The estimated $PoNH_3/PoN_2$ was at least 1400 : 1

| Gas Mix | | Permeability | |
|---|---|---|---|
| Pressure $NH_3$ (bar) | Pressure $N_2$ (bar) | $PoNH_3$ (Barrer) | Po/ΔFIG |
| 0.11 | 0.96 | 7.0 x $10^5$ | 1.8 x $10^7$ |
| 0.21 | 0.85 | 4.7 x $10^5$ | 1.2 x $10^7$ |
| 0.43 | 0.64 | 3.2 x $10^5$ | 8.4 x $10^6$ |
| 0.64 | 0.43 | 2.8 x $10^5$ | 7.4 x $10^6$ |
| 0.85 | 0.21 | 2.4 x $10^5$ | 6.3 x $10^6$ |
| 1.07 | 0 | 2.2 x $10^5$ | 5.7 x $10^6$ |

**Example 4**

Separation of Water Vapor from Nitrogen Using Lithium Nitrate/Sodium Nitrate Immobilized Molten Salt Membrane

A molten salt membrane of a mixture of lithium nitrate/sodium nitrate (0.75 : 0.25 mol %) was immobilized in a stainless steel wire mesh as in Example 1. The membrane was placed in the high temperature cell and used to separate water vapor from nitrogen. The detection system was similar to that of Example 1, except that a set of hygrometers was attached to each of the feed and permeate streams to measure dew or frost point (water concentration). The nitrogen/water feed mixtures were prepared by passing nitrogen through a bubbler, immersed in a water/ethylene glycol constant temperature bath. Feed mixtures of 1 - 3 % (by volume) of water were thus obtained.

Gas flows were 20 $cm^3$/min at about 1 bar. The membrane thickness (steel mesh) was 0.02 cm and the membrane area 0.8 $cm^2$. When the membrane was heated to 230°C, very low nitrogen permeability was

observed. This indicates that the molten salt film was continuous. The membrane was tested over four days with nitrogen/water mixtures. Results were:

| T Membrane (°C) | Water Pressure (mbar) Feed | Permeate | Water Permeability (Barrer) |
|---|---|---|---|
| 200 | 20.63 | 0.88 | $4.3 \times 10^4$ |
| 240 | 20.63 | 0.96 | $5.4 \times 10^4$ |
| 300 | 20.63 | 1.0 | $5.6 \times 10^4$ |
| 200 | 15.98 | 3.92 | $3.6 \times 10^5$ |
| 240 | 15.98 | 4.13 | $3.8 \times 10^5$ |
| 300 | 15.98 | 4.63 | $4.5 \times 10^5$ |

Owing to the low level of nitrogen passing the film, of the order of the background level of nitrogen, only a lower limit for hydrogen/nitrogen selectivity could be estimated. The thus-estimated $PoH_2O/PoN_2$ is about 200 : 1. It is therefore apparent that the sodium/lithium nitrate immobilized salt membrane permits excellent separation of water from nitrogen at 200 - 300° C.

**Example 5**

Separation of Oxygen from Air Using a Lithium Nitrate Immobilized Molten Salt Membrane

Stainless steel woven wire mesh (# 304, about 0.02 cm thick, 4 - 13 micrometers pore size, area about 0.8 $cm^2$) was coated with molten lithium nitrate by grinding dry lithium nitrate and placing it on the mesh under an atmosphere of dry argon. The cell was closed, connected to a gas manifold and heated to 285° C under a feed flow of 10 $cm^3$/min of nitrogen and permeate flow of 10 $cm^3$/min of helium at 1 bar pressure for about 20 hr. At the end of this time the lithium nitrate had wetted the stainless steel mesh and formed a visibly continuous molten film on one surface of the wire mesh, and thus separated the feed and permeate sides of the cell.

The cell was then heated to a furnace temperature of 429° C, using a feed flow of 10 $cm^3$/min of zero grade air and a sweep flow on the permeate side of the membrane of 10 $cm^3$/min of helium, both at about 1 bar pressure and 25° C. The total pressure in the cell during the experiments was about 1 bar.

The concentration of gases in the permeate stream was determined by gas chromatography, using a 183 cm 5A molecular sieve column for nitrogen and oxygen, operated isothermally at 60° C. After the system had stabilized at the operating temperature, there was no leak of nitrogen across the membrane, as indicated by very low nitrogen permeability.

It was observed that oxygen permeability increased gradually over 42 hours of heating. This was attributed to an increase in the concentration of oxides ($O^=$, $O^=_2$, $O^-_2$) in the molten salt. It is proposed that the dissolved oxides in the molten salt catalyzed the reaction:

$$2\ NO^-_3 \rightleftarrows 2\ NO^-_2 + O_2$$

Nitrogen permeability was constant (about 12 Barrers). The following results were obtained:

| Hours (429° C) | Permeability (Oxygen Barrer) | Selectivity $S = Po)_2/PoN_2$ |
|---|---|---|
| 0 | 243 | 20 |
| 5.8 | 356 | 29 |
| 10.0 | 496 | 41 |
| 20.0 | 990 | 82 |
| 30.9 | 1530 | 127 |
| 42.3 | 2065 | 172 |

These results show that a lithium nitrate immobilized salt membrane functioned well for a reasonable time, and had good permeability and selectivity for oxygen.

**Example 6**

Separation of Oxygen from Air Using a Sodium Nitrate Immobilized Molten Salt Membrane

A molten salt membrane of a sodium nitrate was immobilized in a stainless steel wire mesh as in Example 1. The sodium nitrate was loaded onto the stainless steel mesh under an argon atmosphere and the cell was attached to the gas manifold. The cell was heated to 323° C under a feed flow of 10 $cm^3$/min of nitro en and a

permeate flow of 10 $cm^3$/min of helium for about 15 h at 1 bar. The feed gas was then changed to 10 $cm^3$/min of zero grade air at 1 bar.

The cell was heated gradually to 450°C, but no oxygen was detected in the permeate stream, using the analytical method of Example 1. At 477°C, oxygen was observed in the permeate. An essentially constant value was reached after 4 h. The cell was held at 477°C for 18 h and then the temperature was varied between 452°C and 525°C to determine the effect of temperature on oxygen permeability. Results were:

| Temperature (°C) | Permeability (Oxygen Barrer) | Selectivity $S = Po)_2/PoN_2$ |
|---|---|---|
| 452 | 58 | 4 |
| 477 | 172 | 12 |
| 500 | 439 | 31 |
| 525 | 1110 | 79 |

Nitrogen permeability remained relatively constant, at 12 - 15 Barrer. This example shows that sodium nitrate immobilized molten salt can be used for the separation of oxygen from air.

## Claims

1. A process for separating a gas from at least one other gas in a mixture, comprising passing the gas mixture over a membrane selectively permeable to the gas being separated, which membrane comprises a thin, porous inert support in which an active material is immobilized within the pores and the active material is a molten salt being capable of undergoing one or more reversible reactions with the gas being separated, characterized in that the reversible reaction is a formation of a coordination complex, a formation of an organic chemical compound or an oxidation-reduction reaction.

2. The process of claim 1, characterized in that the reversible oxidation-reduction reaction is a nitrate-nitrite interconversion, oxygen is the gas being separated and the molten salt in the membrane is a mixture of alkali metal nitrate and alkali metal nitrite.

3. The process of claim 1 or 2, characterized in that the gas passing through the membrane is removed by a stream of sweep gas.

## Patentansprüche

1. Verfahren zur Abtrennung eines Gases von mindestens einem anderen Gas in einer Mischung, bei dem diese Gasmischung über eine für das zu trennende Gas selektiv permeable Membran geleitet wird, wobei diese Membran einen dünnen porösen, inerten Träger umfaßt, in dem innerhalb der Poren ein aktives Material festgehalten wird und dieses aktive Material eine Salzschmelze ist, die einer oder mehreren reversiblen Reaktionen mit dem zu trennenden Gas unterzogen werden kann,
dadurch gekennzeichnet,
daß die reversible Reaktion die Bildung eines Koordinationskomplexes, die Bildung einer organischen chemischen Verbindung oder eine Oxidations-Reduktions-Reaktion ist.

2. Verfahren nach Anspruch 1,
dadurch gekennzeichnet,
daß die reversible Oxidations-Reduktions-Reaktion eine wechselseitige Umwandlung von Nitrat-Nitrit ist, das zu trennende Gas Sauerstoff ist und die Salzschmelze in der Membran eine Mischung von Alkalimetallnitrat und Alkalimetallnitrit ist.

3. Verfahren nach Anspruch 1 oder 2,
dadurch gekennzeichnet,
daß das durch die Membran hindurchgehende Gas durch einen Spülgasstrom entfernt wird.

## Revendications

1. Procédé destiné à séparer un gaz à partir au moins d'un autre gaz dans un mélange, comprenant l'opération consistant à faire passer le mélange gazeux sur une membrane sélectivement perméable au gaz à séparer, laquelle membrane comprend un support inerte, poreux, mince dans lequel une substance active est immobilisée à l'intérieur des pores et la substance active est un sel fondu pouvant subir une ou plusieurs réactions réversibles avec le gaz à séparer, caractérisé en ce que la réaction réservible est une formation d'un complexe de coordination, une formation d'un composé chimique organique ou une réaction d'oxydo-réduction.

2. Procédé selon la revendication 1, caractérisé en ce que la réaction d'oxydo-réduction réversible est une interconversion nitrate-nitrite, en ce que l'oxygène est le gaz à séparer et le sel fondu dans la membrane est un mélange de nitrate de métaux alcalins et un nitrite de métaux alcalins.

3. Procédé selon la revendication 1 ou 2, caractérisé en ce que le gaz traversant la membrane est évacué par un courant de gaz de lavage.

Fig. 1

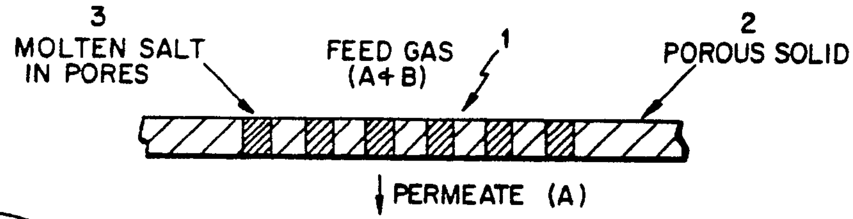


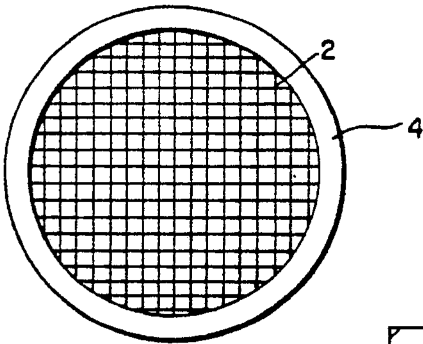


Fig. 2

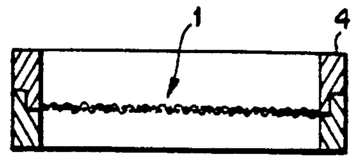


Fig. 3

Fig. 4